# EUROPÄISCHE PATENTSCHRIFT

(11) **EP 3 360 653 B1**
(45) Veröffentlichungstag und Bekanntmachung des Hinweises auf die Patenterteilung: **30.06.2021**
(21) Anmeldenummer: 18000106.7
(22) Anmeldetag: 07.02.2018
(51) Int. Cl.: B25J 13/08, B25J 15/00

(54) **GREIFVORRICHTUNG MIT EXTERNEM MAGNETFELDSENSOR**
GRIPPING DEVICE WITH EXTERNAL MAGNETIC FIELD SENSOR
DISPOSITIF DE PRÉHENSION POURVU DE CAPTEUR DE CHAMP MAGNÉTIQUE EXTERNE

(30) Priorität: 09.02.2017 DE 102017001221
(43) Veröffentlichungstag der Anmeldung: 15.08.2018
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- WO-A1-2008/067846
- DE-A1- 19 847 314
- DE-A1- 19 947 997
- DE-U1- 9 214 477
- DE-U1- 29 602 216
- JP-A- H02 256 299

## Beschreibung

Die Erfindung betrifft eine Greifvorrichtung mit mindestens zwei aufeinander zu- oder voneinander wegbewegbar angeordneten Greifelementen, die im Gehäuse in einem Führungskörper der Greifvorrichtung auf Schlitten sitzen oder von Schlitten getriebetechnisch angelenkt werden.

Aus der DE 10 2015 012 779 A1 ist eine Parallelgreifvorrichtung bekannt, bei der in einem einteiligen Gehäuse als Antrieb ein Elektromotor mit drei nachgeschalteten Getrieben untergebracht ist. Bei dieser Vorrichtung sind im Gehäuse zwei Schlitten gelagert, die die Greifelemente tragen. Zur Positionserkennung der Schlittenhübe ist am Elektromotor ein Drehgeber angeordnet.

Die WO 2008/067 846 A1 beschreibt einen mit einem Positionssensor versehenen Behältergreifer. Der als Parallelgreifer aufgebaute Greifer weist an der Stirnseite eines greiferfingertragenden Schlittens einen einen Magnet haltenden Stehbolzen auf. Der Stehbolzen ist an der Stirnseite eines der beiden Schlitten montiert. Er steht dazu mehr als 30% der Schlittenlänge über diesen in Schlittenverfahr- bzw. Greifrichtung über.

Aus der DE 296 02 216 ist eine Greifvorrichtung bekannt, deren Greiferbackenhub mittels Positionsdetektoren erfassbar ist. Dazu ist in den einzelnen zylindrischen Greifbacken in der Führungswandung jeweils ein Permanentmagnet eingelassen. Das Führungsgehäuse weist eine Aufnahmenut für einen magnetfeldempfindlichen Sensor auf. Die Aufnahmenut schwächt den Querschnitt des Führungsgehäuses an der Stelle der geringsten Gehäusewandstärke.

Die DE 199 47 997 A1 beschreibt einen druckluftbetätigten Parallelgreifer, mit zwei in einer Gehäusenut hintereinander gelagerten greifelementetragenden Schlitten. Unterhalb der Gehäusenut befindet sich eine zur Gehäusenut parallele durchgehende Zylinderbohrung, die jeweils stirnseitig über Deckel verschlossen ist. In der Zylinderbohrung sind zwei Pneumatickolben hintereinander gelagert. Jeder Pneumatikkolben ist mit einem Schlitten mittels eines Querstiftes starr gekuppelt. Parallel zur durchgehenden Zylinderbohrung befindet sich im Greifergehäuse eine parallele Sacklochbohrung, die in geringem Abstand zur Zylinderbohrung angeordnet ist. In der Sacklochbohrung steckt eine mehrere Hallsensoren tragende Platine. Die Hallsensoren befinden sich im Verfahrbereich eines Pneumatickolbens. Der nächstgelegene Pneumatikkolben lagert in seinem Inneren einen Permanentmagnet.

Aus der DE 198 47 314 A1 ist ein Sauggreifer bekannt, der mit einem Ventil ausgestattet ist, das für das Ansaugen des vom Sauggreifer anzuhebenden Greiferobjekts das Vakuum sperrt, wenn der Sauger des Sauggreifers nicht am Greifobjekt anliegt. Das Ventil wird durch einen aus dem Sauger herausragenden - das Greifobjekt kontaktierenden - Taststift betätigt. An dem dem Sauger entfernt gelegenen freien Ende des Taststifts befindet sich ein Magnet, der beim Anheben des Taststifts die elektrischen Kontakte eines Reed-Relais schließt, um damit die Öffnung des Ventils zu detektieren.

Der vorliegenden Erfindung liegt die Problemstellung zugrunde, eine Greifvorrichtung zu entwickeln, bei der für eine Anordnung eines Magnetfelderzeugers - zur hubabhängigen Auslösung eines Schaltsignals in einem außen am Gehäuse gelagerten handelsüblichen Magnetfeldsensor - im Inneren des Vorrichtungsgehäuses eine Tragvorrichtung so gestaltet und gelagert wird, dass diese bei minimalem Bauraum und geringer Gewichtskraft einfach und sicher zu montieren ist.

Diese Problemstellung wird mit den Merkmalen des Patentanspruchs 1 gelöst. Dabei ist im Führungskörper als Tragvorrichtung eine Messmittelnut eingearbeitet, in der ein Magnetfeldsensor fest oder justierbar gehalten wird. An mindestens einem Schlitten innerhalb des Führungskörpers ist ein Tragelement quer zur Greifrichtung angeordnet, das einen - hinter der Messmittelnut befindlichen - Magnetfelderzeuger lagert.

Mithilfe des internen Magnetfelderzeugers und des externen Magnetfeldsensors wird die Greifvorrichtung in Kombination mit einer elektronischen Signalauswertung in die Lage versetzt, die Schlitten- bzw. Greifelementebewegung zumindest punktuell oder bereichsweise zu messen. Die Messung erfolgt direkt zwischen den die Greifelemente tragenden oder antreibenden Schlitten und dem oder den in oder an der Gehäusewandung positionierten Magnetfeldsensoren. Letztere sitzen z.B. einzeln oder zu zweit in einer gehäuseseitigen Messmittelnut. Am jeweiligen Schlitten ist innerhalb des Gehäuses eine einfach zu montierende und klein bauende, einen Magnet lagernde Tragvorrichtung befestigt, die relativ, z.B. parallel zur Längsausdehnung des rohrförmigen Magnetfeldsensorgehäuses, bewegt wird.

Durch diese Messanordnung können sich Spiele und andere Nachgiebigkeiten im Getriebezug des Greiferantriebs kaum oder nicht auf die Wegmessung oder punktuelle Positionserfassung am Schlitten oder Greifelement auswirken.

Ggf. sind in einem Sensorgehäuse mehr als ein magnetfeldempfindlicher Sensor untergebracht. Die eingebauten Sensoren können auch verschiedene Meßprinzipien verwenden.

Bei Parallel- oder Mehrfingergreifern können die für die Führung im Gehäuse verwendeten, die Schlitten lagernden Führungsschienen fast beliebige Querschnitte haben. Neben dem im Ausführungsbeispiel gezeigten Querschnitt sind u.a. auch rechteckige, runde, ovale und sägezahnartige Querschnitte denkbar. Die Schlitten sind ggf. quer zur Greifrichtung allseitig abstützend gelagert. Sie können z.B. auch hintereinander in nur einer Führungsschiene, -nut oder -bohrung gelagert sein. Ferner können hier - je nach Greifaufgabe - auch Führungsschienen eingesetzt werden, die z.B. tragfähig sind oder eine verschleißfeste oder reibungsarme Oberfläche aufweisen. Je nach Werkstoffwahl lassen sich diese Eigenschaften auch kombinieren.

Angetrieben werden die Schlitten - oder bei Winkelgreifern die Greifelementeträger - beispielsweise über mehrere hintereinander angeordnete Getriebe, z.B. ein Stirnradgetriebe, ein Schneckengetriebe und ein Spindel- oder Kurvengetriebe. Anstelle dieser Getriebe oder zusätzlich zu diesen können auch Schiebekeilgetriebe, Hebel-, Kulissen- oder Zugmittelgetriebe eingesetzt werden.

Die Greifvorrichtungen können sowohl als Außen- als auch als Innengreifer verwendet werden. Des Weiteren gilt ein aufeinander Zubewegen der Greifelemente tragenden Schlitten auch für Greifelemente, deren Schlitten in nebeneinanderliegenden Schlittenführungsnuten geführt sind.

Weitere Einzelheiten der Erfindung ergeben sich aus den Unteransprüchen und der nachfolgenden Beschreibung schematisch dargestellter Ausführungsformen.
- Figur 1:: Perspektivische Ansicht einer Parallelgreifvorrichtung;
- Figur 2:: Teilquerschnitt zu Figur 1 im Bereich des Tragelements;
- Figur 3:: Perspektivische Ansicht einer Parallelgreifvorrichtung ohne größere Gehäuseteile;
- Figur 4:: wie Figur 3, jedoch im 180 Winkelgrade geschwenkt und ohne den vorderen Schlitten;

- Figur 5:: Mittenlängsschnitt durch die Greifvorrichtung;
- Figur 6:: Mittenquerschnitt durch die Greifvorrichtung;

- Figur 7:: Perspektivische Ansicht von der Bedienseite aus;
- Figur 8:: Perspektivische Ansicht von der Rückseite aus;
- Figur 9:: Längsschnitt der Schneckenwelle mit längsfedernder Wellenlagerung;

- Figur 10:: Perspektivische Unteransicht des Führungskörpers;
- Figur 11:: Perspektivische Vorderansicht des Magnettragelements;
- Figur 12:: Perspektivische Rückansicht des Magnettragelements;
- Figur 13:: Ausschnitt zu Figur 5, vergrößerte Kabelklemmung.

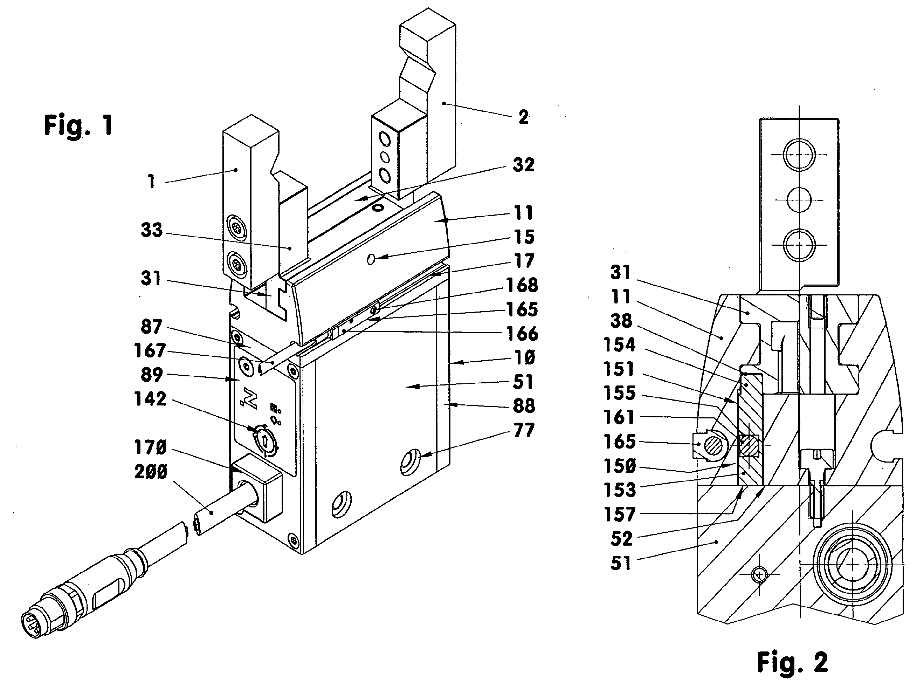

Die Figur 1 zeigt eine Parallelgreifvorrichtung mit einem z.B. vierteiligen Gehäuse. Der untere Teil des Gehäuses (10) ist ein Grundkörper (51), in dessen Ausnehmungen ein Elektromotor (81), ein Stirnradgetriebe (120), ein Winkelgetriebe (100), ein Weg- oder Winkelmesssystem (130) und mehrere elektronische Baugruppen (141, 145, 146) untergebracht sind. Die beiden Stirnseiten des Grundkörpers (51) sind durch großflächige Deckel (87, 88) verschlossen. Der obere Teil des Gehäuses ist ein Führungskörper (11), in dem zwei einander kontaktierende, in entgegengesetzte Richtungen bewegbare Schlitten (31, 32) gleitgelagert sind. In den beiden großen Seitenwandungen des Führungskörpers (11) sind als Tragvorrichtungen für externe Magnetfeldsensoren (165) passende Messmittelnuten (17) eingearbeitet. Im Führungskörper (11) befinden sich hinter diesen Messmittelnuten (17) an den Schlitten (31, 32) befestigte Magnetfelderzeuger (161). Die Kombination aus Magnetfelderzeuger (161) und Magnetfeldsensoren (165) dient z.B. der Schlittenhubkontrolle.

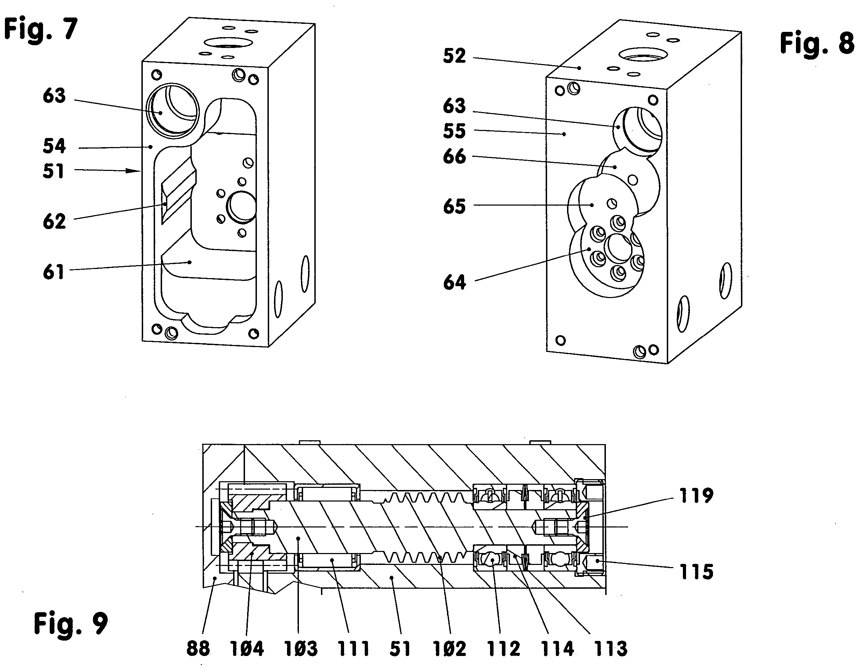

Der Grundkörper (51) ist ein quaderförmiger, beispielsweise aus einer Aluminiumlegierung hergestellter Gegenstand. Die Abmessungen des Grundkörpers (51) betragen im Ausführungsbeispiel 55 mm * 43,8 mm * 26 mm, vgl. Figuren 7 und 8. Von seiner Vorderseite aus ist in den Grundkörper (51) eine große 43,8 mm tiefe, nahezu quaderförmige Hauptausnehmung (61) eingearbeitet. Letztere dient unter anderem der Aufnahme des Antriebsmotors (81) und anderer elektronischer Baugruppen (141, 145, 146). Circa mittig weist die Hauptausnehmung (61) beidseitig je einen Stollen (62) zur Fixierung eines Teils der elektronischen Baugruppen auf.

Um den Antriebsmotor (81) lagern zu können, geht die Hauptausnehmung (61) im unteren Bereich in eine Bohrung über, die von sechs kleineren Senkbohrungen umgeben ist, vgl. Figur 8. Die Senkungen der kleineren Senkbohrungen liegen auf der Rückseite des Grundkörpers (51).

Nach Figur 7 befindet sich links oberhalb der Hauptausnehmung (61) eine die beiden Stirnseiten des Grundkörpers (51) verbindende Wellenlagerausnehmung (63). In ihr wird die Schneckenwelle (103) des Winkelgetriebes (100) vorgespannt gelagert. Gemäß Figur 8 weist die Rückseite des Grundkörpers (51) unterhalb der Wellenlagerausnehmung (63) drei einander bereichsweise überlappende zylindrische Einsenkungen (64 - 66) auf. Die erste, untere Einsenkung ist die Antriebseinsenkung (64), in der die Senkbohrungen für die Motorhalterung angeordnet sind. Die zweite, mittlere Einsenkung ist eine Nebenwelleneinsenkung (65), in der die Nebenwelle (121) des Stirnradgetriebes (120) untergebracht ist. Zwischen dieser Einsenkung (65) und der Wellenlagerausnehmung (63) befindet sich eine Zwischenradeinsenkung (66), in der das Zwischenrad (108) des Stirnradgetriebes (120) gelagert ist.

Die rückwärtige Stirnfläche des Grundkörpers (51) wird durch einen quaderartigen, 5 mm starken, das Stirnradgetriebe (120) mitlagernden hinteren Deckel (88) verschlossen. Die Nebenwelle (121) und das Zwischenrad (108) haben beidseitig jeweils Wellenzapfen, über die sie gleitgelagert in entsprechenden Bohrungen des Grundkörpers (51) und des Deckels (88) eingreifen.

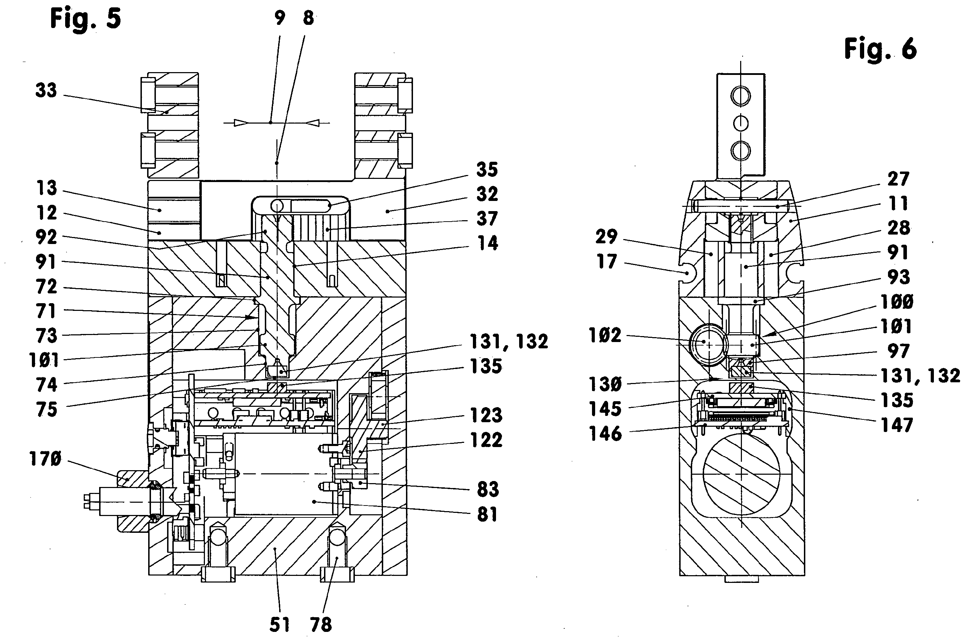

Gemäß der Figuren 7 und 8 hat der Grundkörper (51) im unteren Bereich jeweils zwei parallele Gewindedurchgangsbohrungen (77), die in beiden großen Seitenwänden jeweils in Senkungen münden. Auch die Unterseite des Grundkörpers (51) weist zwei Gewindebohrungen (78) auf, die einzeln mittig in die Gewindedurchgangsbohrungen (77) münden, vgl. Figur 5.

Die Oberseite des Grundkörpers (51) verfügt mittig über eine zentrale Stufensacklochbohrung (71), die sich unter einem gestuften Verringern ihres Durchmessers in Richtung der Hauptausnehmung (61) erstreckt und kurz vor dieser endet. Die Stufensacklochbohrung (71) hat dazu hintereinander drei Zonen, eine Axiallagerzone (72), eine Schneckenradzone (73) und eine Radiallagerzone (74). Die Radiallagerzone (74) hat, z.B. zum Schutz der in der Hauptausnehmung (61) untergebrachten Elektronik, einen planen, beispielsweise 0,5 mm dicken Boden (75), sodass zwischen der Stufensacklochbohrung (71) und der Hauptausnehmung (61) keine Verbindung besteht.

Auf der Oberseite des Grundkörpers (51) sitzt z.B. vollflächig der Führungskörper (11) auf. Im Bereich der oberen Hälfte des Führungskörpers (11) ist eine Doppelführungsnut (12) eingearbeitet, deren Länge der Länge des Führungskörpers (11) entspricht. Bei einer maximalen Breite von 15 mm hat sie eine Tiefe von 12 mm. In die Doppelführungsnut (12) ragt pro Seite, je ein Führungsstollen (13) zum Beispiel 2,5 mm tief hinein. Die Führungsstollen (13) haben oben und unten parallele, zum Beispiel 5 mm voneinander entfernt liegende Führungsflächen, die zudem in zueinander parallelen Ebenen liegen.

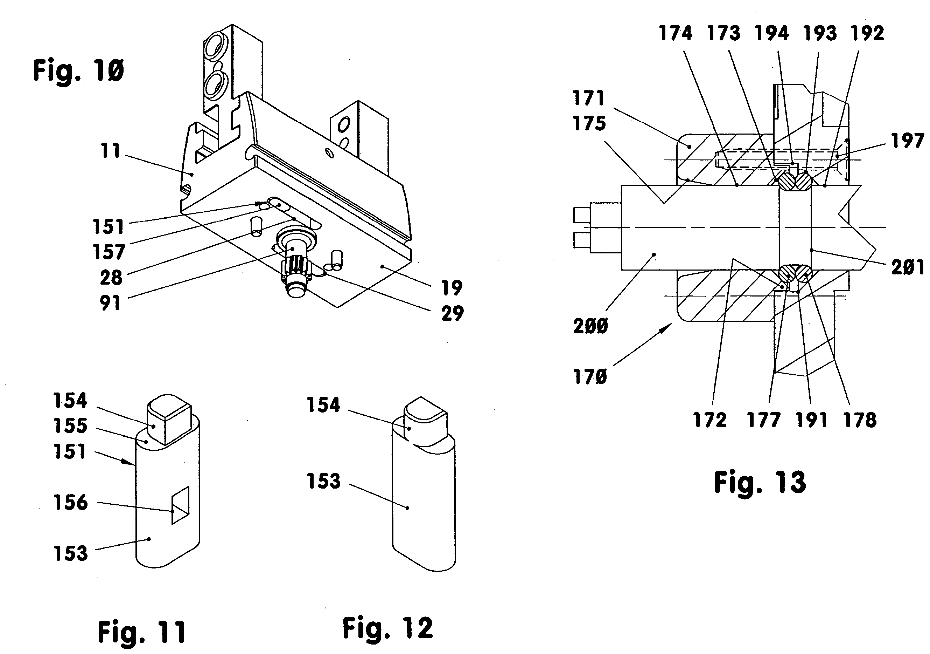

Mittig weist der Führungskörper (11) eine in der Verlängerung der Stufensacklochbohrung (71) des Grundkörpers (51) gelegene zentrale Durchgangsbohrung (14) auf. In ihr wird der obere Teil der Synchronisierwelle (91) ebenfalls radial gelagert. Beidseits der Durchgangsbohrung (14) befinden sich quer zur Greifrichtung (9) zwei Langlöcher (28, 29), vgl. Figuren 6 und 10.

In den beiden Langlöchern (28, 29) bewegen sich - bei einem Betätigen der Greifvorrichtung - die Magnethalterungen (150) mit ihren Tragelementen (151, 152). Die Langlöcher (28, 29) erstrecken sich vom Grund der Doppelführungsnut (12) bis zur Unterseite (19) des Führungskörpers (11). Jedes Langloch (28, 29) hat z.B. eine Breite von 3,1 mm und eine Länge von 17 mm. Die Langlochstirnseiten haben jeweils die Form eines halben Zylindermantels. Jedes Langloch (28, 29) ist mit der Vorderkante seiner Kontur von der nächstgelegenen Stirnseite des Führungskörpers (11) z.B. 14,4 mm entfernt.

In der Unterseite des Führungskörpers (11) befinden sich beidseits der Durchgangsbohrung (14) vier kleinere Bohrungen. Die beiden der Durchgangsbohrung (14) nächstgelegenen Bohrungen nehmen die Befestigungsschrauben (23) auf, mit denen der Führungskörper (11) am Grundkörper (51) verschraubt wird. Die beiden anderen, weiter entfernt liegenden Bohrungen, dienen der Aufnahme von Passstiften (24).

Nach den Figuren 5 und 6 weist der Führungskörper (11) im oberen Drittel und in Längsrichtung mittig eine Querbohrung (15) auf, die einen Haltestift (27) als Hubanschlag für die Schlitten (31, 32) führungskörperseitig fixiert lagert.

In jeder großen, konvex gewölbten Seitenwandung des Führungskörpers (11) ist im unteren Bereich, also in der Nähe des Grundkörpers (51), jeweils eine Messmittelnut (17) angeordnet, die zum Beispiel zur Aufnahme eines Magnetfeldsensors dienen kann. Beide Messmittelnuten (17) sind z.B. parallel zur Greifrichtung (9) orientiert.

An der Rückseite der Hauptausnehmung (61) ist der Elektromotor (81) derart befestigt, dass das auf seiner Welle sitzende Antriebsrad (83) in den zwischen dem hinteren Deckel (88) und dem Grundkörper (51) gelegenen Zwischenraum hineinragt, vgl. Figur 5. Das Antriebsrad (83) treibt die Nebenwelle (121) über deren großes Nebenwellenrad (122) an. An dem großen Nebenwellenrad (122) ist ein kleines Nebenwellenrad (123) angeformt, das mit dem in der Zwischenradeinsenkung (66) angeordneten Zwischenrad (108) kämmt, vgl. Figur 5. Das Zwischenrad (108) kämmt mit dem Schneckenwellenstirnrad (104) der oben im Grundkörper (51) gelagerten Schneckenwelle (103) des Winkelgetriebes (100). Das Stirnradgetriebe (120) hat eine Übersetzung ins Langsame von 1 : 4,8.

In Figur 9 ist die Schneckenwelle (103) des Winkelgetriebes (100), das hier ein Schneckengetriebe ist, im Längsschnitt in ihrer Einbaulage dargestellt. Die Schneckenwelle (103) ist eine beidseits wälzgelagerte Welle, die im mittleren Bereich als Schnecke (102) ausgebildet ist. An ihrem linken Ende trägt sie ein Schneckenwellenstirnrad (104), das mithilfe einer Anschlagplatte und einer Senkschraube drehstarr an der Schneckenwelle (103) befestigt ist. Zwischen dem Schneckenwellenstirnrad (104) und der Schnecke (102) ist als Radiallager ein im Grundkörper (51) eingepresstes, mit einem Außenring ausgestattetes Nadellager (111) eingebaut.

Zwischen der Schnecke (102) und dem rechten Wellenende, vgl. Figur 9, sitzen zwei axial z.B. mittels zweier Tellerfedern (113) vorgespannte Rillenkugellager (112). Dazu sind zwischen den Innenringen beider Rillenkugellager (112) zwei Stützhülsen (114) mit Abstand zueinander angeordnet. Jede Stützhülse (114) lagert zu dem zwischen den Stützhülsen (114) gelegenen Freiraum hin eine Tellerfeder (113). Beide Tellerfedern kontaktieren sich über ihre Außenkanten im Bereich des Freiraums. Der Außenring des neben der Schnecke (102) gelegenen Rillenkugellagers (112) stützt sich an einem Gehäusebund ab. Der Außenring des anderen Rillenkugellagers (112) wird im Grundkörper (51) über eine Ringschraube (115) axial einstellbar fixiert. Der Innenring des äußeren Rillenkugellagers (112) stützt sich axial an einer mittels einer Senkschraube befestigten Anschlagplatte ab.

Da beide Innenringe der Rillenkugellager (112) auf der Schneckenwelle (103) jeweils über einen Spielsitz gelagert sind und da zudem zwischen beiden Stützhülsen (114), bei ruhendem Getriebe, ein Abstand von 0,4 mm vorhanden ist, ermöglicht diese elastische Axiallagerung eine axiale Verschiebbarkeit der Schneckenwelle (103) innerhalb des Grundkörpers (51). Mit zunehmendem Verlagerungshub wird aufgrund der Wirkung der Tellerfedern (113) die Rückstellkraft größer.

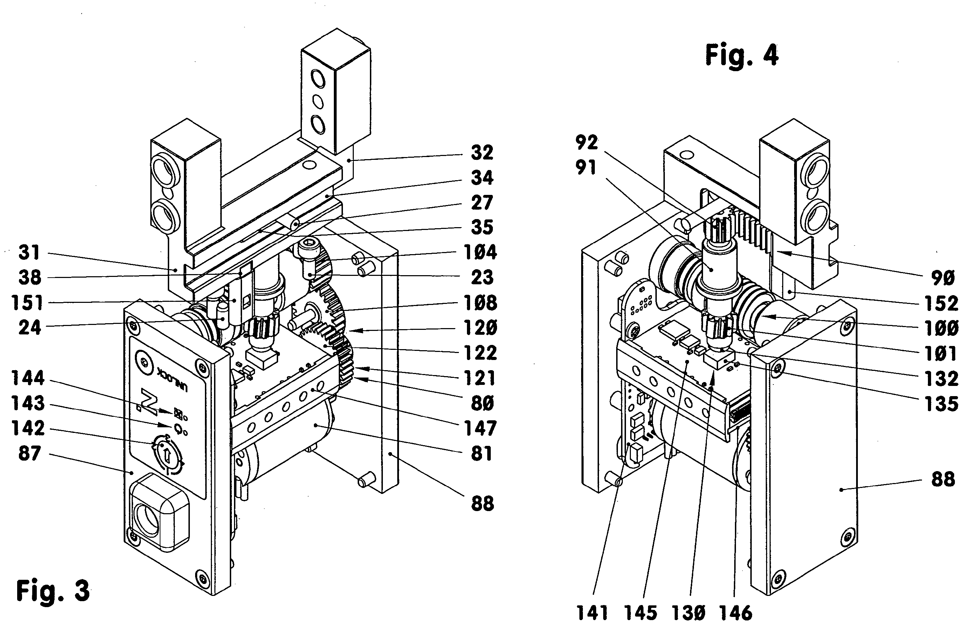

Die Schnecke (102) der Schneckenwelle (103) treibt die Synchronisierwelle (91) an, vgl. Figuren 3 und 4, die wiederum die Schlitten (31, 32) synchron über ein Zahnstangengetriebe (90) gegenläufig bewegt. Die Synchronisierwelle (91) sitzt dazu mit ihrer unteren Hälfte in der Stufensacklochbohrung (71) des Grundkörpers (51). An ihrem unteren Ende, vgl. Figur 6, trägt sie ein Schraubrad (101), das von der Schnecke (102) angetrieben wird. Die Übersetzung von der Schnecke (102) zum Schraubrad (101) beträgt 1:12 ins Langsame.

Im mittleren Bereich hat die Synchronisierwelle (91) einen Axiallagerflansch (93), mit dem sie in der Axiallagerzone (72) der Stufensacklochbohrung (71) axial gelagert ist. Am oberen Ende trägt die Synchronisierwelle (91) ein geradverzahntes Stirnrad (92). Zwischen dem Stirnrad (92) und dem Axiallagerflansch (93) ist die Synchronisierwelle (91) in der Durchgangsbohrung (14) des Führungskörpers (11) radial gleitgelagert.

Nach den Figuren 3 und 6 sind im Führungskörper (11) zwei über ihre Längsseite aneinander liegende und relativ zueinander bewegliche Schlitten (31, 32) gelagert. Zwischen den Längsseiten der Schlitten befindet sich eine Arbeitsfuge.

Der einzelne Schlitten (31, 32) ist im Wesentlichen ein quaderförmiger Stahlkörper, der zum Beispiel aus dem Werkstoff 16MnCr5 hergestellt ist. Er hat die Abmessungen 53,8 mm * 12 mm * 10 mm. Über diese Abmessungen hinaus steht bei jedem Schlitten (31, 32) ein zum Beispiel 21,5 mm langer Schlittenarm (33) nach oben ab. An jedem Schlittenarm (33) ist ein Greifelement (1, 2) befestigt, vgl. Figur 1.

Die der Arbeitsfuge abgewandte Längsseite eines jeden Schlittens (31, 32) weist jeweils eine durchgehende Schlittenlängsnut (34) mit rechteckigem Querschnitt auf. Der Querschnitt der Schlittenlängsnut (34) misst z.B. 5 mm * 2,6 mm. Die Längsnut (34) besitzt im mittleren Bereich ein Langloch (35), das jeweils von einem, im Führungskörper (11) befestigten Haltestift (27) durchquert wird. Die Enden der Langlöcher (35) benutzen den Haltestift (27) als Führungsanschlag für die Schlitten (31, 32).

Gemäß des in den Figuren 3 und 4 dargestellten Ausführungsbeispiels weist jeder Schlitten (31, 32) in seiner Unterseite, also der Seite, die zum Grundkörper (51) hin orientiert ist, eine Haltenut (38, 39) auf. Nach den Figuren 2 und 3 ist die Haltenut (38, 39) von der Schlittenaußenseite aus z.B. 2,75 mm in die Richtung der Schlittenlängsflanke eingefräst, in die die Zahnstange (27) eingearbeitet ist. Die Breite der Haltenut (38, 39) hat eine Breite von ca. 3 mm. Die parallel zur Mittellinie (8) ausgerichtete Tiefe der Haltenut (38, 39) beträgt 2,5 mm. Sie reicht somit nicht in den Bereich der Schlittenlängsnut (34) hinein.

Jede Haltenut (38, 39) ist von der äußeren Schlittenstirnseite des Schlittenendes, das den jeweiligen Schlittenarm (33) trägt, im Ausführungsbeispiel - bezogen auf die Haltenutmitte - 15 mm entfernt. Damit liegt hier die Mitte der Haltenut auf der Höhe der jeweils letzten Zahnlücke der hinter der Haltenut (38, 39) gelegenen Zahnstange (27). Jede Haltenut (38, 39) dient der Aufnahme des Tragelements (151, 152) der Magnethalterung (150).

Die der Arbeitsfuge zugewandte Längsseite eines jeden Schlittens (31, 32) verfügt unterhalb des jeweiligen Langlochs (35) über eine in den Schlitten (31, 32) eingearbeitete Zahnstange (37). Jede dieser Zahnstangen (37) kämmt mit dem Synchronrad (92).

Im vorderen Deckel (87) ist eine beschriftete Blende (89) befestigt. Im unteren Bereich der Blende (89) befindet sich eine Bohrung, die sich auch im Deckel (87) fortsetzt. In dieser Bohrung sitzt ein Drehschalter (142) für z.B. vier Schwenkpositionen. Die Schwenkpositionen sind mit den Nummern 1 - 4 markiert und beschriftet. Jede Nummer steht für eine einstellbare Solldrehzahl des Elektromotors (81). Die Drehzahlen sind im Ausführungsbeispiel 11500, 10000, 8000 und 6000 U/min. Die höchste Drehzahleinstellung ist mit der Nummer 1 beschriftet.

Der Drehschalter (142) ist auf der auf der Rückseite des vorderen Deckels (87) befestigten Frontplatine (141) angeordnet. Letztere trägt neben dem Drehschalter (142) eine Stromversorgungs-LED (143), eine Fehlermeldungs-LED (144) und mehrere Stecker, u.a. für die Anbindung weitere Platinen (145, 146), den Anschluss des Motors (81) und den Anschluss eines durch die Kabelfixierung (170) verlegbaren Versorgungskabels.

Auf der Frontplatine (141) sind eine Auswerteplatine (145) und eine Motortreiberplatine (146) senkrecht aufgesteckt. Die dem Motor (81) nächstgelegene Motortreiberplatine (146) trägt die Motortreiber und die Schaltungen für die Drehzahl- und Stromregelkreise. Auf der Auswerteplatine (145) sind unter anderem der mehrere Hallsensoren aufweisende Magnetfeldsensor (135) und die CPU für die Motortreiber untergebracht.

Der hier verwendete Magnetfeldsensor (135) weist z.B. vier zueinander winkelversetzte einzelne Halleffektsensoren auf. Anstelle der vier Einzelsensoren können auch zwei, acht oder mehr verwendet werden. Nach den Figuren 5 und 6 befindet sich oberhalb des Magnetfeldsensors (135) im unteren freien Ende der Synchronisierwelle (91) ein z.B. eingeklebter Permanentmagnet (132). Der scheibenförmige Permanentmagnet (132), der eine Scheibenstärke von z.B. 2 mm und einen Durchmesser von 4 mm aufweist, ist mittig in Nord- und Südpol geteilt. Die Teilungsebene liegt hierbei in einer Ebene, in der auch die Mittellinie des scheibenförmigen Magneten (132) liegt. Der Permanentmagnet (132) ist z.B. 1 mm in der Stirnseite der Synchronisierwelle (91) versenkt. Sein Abstand gegenüber dem Magnetfeldsensor (135) beträgt im Ausführungsbeispiel 1,4 mm. Generell kann der Abstand zwischen 0,5 und 3 mm liegen.

Sind im Magnetfeldsensor (135) zum Beispiel zwei rechtwinklig zueinander angeordnete Halleffektsensoren eingebaut, liefern die beiden Sensoren jeweils entgegengesetzte Hall-Spannungen. Aus diesen beiden Hall-Spannungen errechnet die Sensorelektronik den Verstellwinkel der Synchronisierwelle (91). Im vorliegenden Fall liefert bei vier Halleffektsensoren und einem nachgeschalteten 12-bit-A/D-Wandler eine volle Umdrehung eine Auflösung von 4096 Winkelteilen. Damit beträgt theoretisch die kleinste Greifelementhubspanne 4/1000 mm.

Im vorliegenden Ausführungsbeispiel dreht sich die Synchronisierwelle (91) für einen vollen Greifelementehub maximal um 360 Winkelgrade. Sollten bei einer Greifvorrichtung länge Hübe erforderlich sein und hierfür sich die Synchronisierwelle (91) um mehr als 360 Winkelgrade drehen müssen, ist für eine absolute Schlittenpositionsermittlung eine Elektronikerweiterung notwendig.

Zur Realisierung eines Schlittenhubkontrollsystems aus der Kombination eines gehäuseinternen Magnetfelderzeugers (161) und eines außen am Gehäuse (10) bzw. am Führungskörper (11) angeordneten handelsüblichen Magnetfeldsensors (165) wird als Magnethalterung (150) ein aus dem Kunststoff Polyoxymethylen (POM) gefertigtes, als Tragelement bezeichnetes Spritzgussteil (151, 152) verwendet.

Gemäß der Figuren 11 und 12 besteht das einzelne Tragelement (151, 152) aus einem Haltestab (153) und einem daran angeformten Einsteckzapfen (154). Der z.B. 11 mm lange Haltestab (153) hat einen ovalen Querschnitt mit der Länge von 6,2 mm. In der unteren Hälfte weist der Haltestab (153) eine Magnetausnehmung (156) auf. Letztere hat die Form einer Quaderoberfläche. Die Magnetausnehmung (156) ist hier 2,5 mm tief, bei einer Breite von 1,9 mm und einer Höhe von 2,6 mm.

In Figur 2 ist die Magnethalterung (150) im Schnitt dargestellt. Dort ist auch der in die Magnetausnehmung (156) eingesetzte scheibenförmige Permanentmagnet (161) im Schnitt gezeigt. Im vorliegenden Fall ist der Permanentmagnet (161), der bei einer Breite von 1,9 mm einen Durchmesser von 2,6 mm hat, in die Magnetausnehmung (156) eingeklebt. Es ist auch denkbar, den Magnet in die Ausnehmung einzuklemmen. Um beim Einklemmen die Haltekraft in der Magnetausnehmung (156) zu verbessern, kann Letztere im Bereich ihrer Öffnung mit einem Hinterschnitt ausgestattet sein. Der Permanentmagnet (161) steht nicht über die Außenwandung des Haltestabs (153) über.

Der angeformte Einsteckzapfen (154) hat bei einer Breite von 3 mm eine Tiefe von 2,75 mm. Seine in Richtung der Längsausdehnung des Tragelements (151, 152) gemessene Länge beträgt 2,4 mm. Die Vorderseite des Einsteckzapfens (154) ist gegenüber der mit der Magnetausnehmung versehenen Vorderseite des Tragelements (151, 152) um 0,35 mm zurückversetzt. Die Rückseite des Einsteckzapfens (154), die bündig mit der Rückseite des Tragelements ist, ist gegenüber den Seitenflanken des Einsteckzapfens (154) pro Kante mit einem Radius von 1,2 mm abgerundet. Die freie Stirnseite des Einsteckzapfens ist mit einer Fase 0,2 x 45° angefast. Am Übergang zum Einsteckzapfen (154) hat das Tragelement (151, 152) eine Anschlagfläche (155), die parallel zur tragelementseitigen unteren Stirnfläche (157) ist.

Jeder Einsteckzapfen (154) sitzt in der Haltenut (38, 39) des jeweiligen Schlittens (31, 32) über eine Übermaßpassung nach DIN ISO 286-1. Im Gegensatz dazu bewegt sich der Haltestab (153) mit einem Spiel von 0,05 bis 0,1 mm in dem ihn umgebenden Langloch (28, 29) des Führungskörpers (11).

Um das einzelne Tragelement (151, 152) in das Gehäuse (10) einzubauen, werden zunächst die Schlitten (31, 32) in die Doppelführungsnut (12) des Führungskörpers (11) bündig eingeschoben. Anschließend wird das mit dem Permanentmagnet (161) ausgestattete Tragelement im Bereich des jeweiligen führungskörperstirnseitennahen Langlochendes mit dem Einsteckzapfen (154) voraus eingelegt, um abschließend in die entsprechende Haltenut (38, 39) eingepresst zu werden. Sobald die Anschlagfläche (155) an der jeweiligen Schlittenunterseite anliegt, schließt der Boden (157) des Tragelements (151, 142) mit der Unterseite des Führungskörpers (11) bündig oder mit geringem Untermaß ab. Somit kann sich das Tragelement (151, 152) - nach dem Befestigen des Führungskörpers (11) am Grundkörper (51) - auch im Betrieb an der Oberseite (52) des Grundkörpers (51) formschlüssig und verliersicher abstützen.

Nach Figur 1 sitzt außen in der in den Führungskörper (11) eingearbeiteten außenliegenden Messmittelnut (17) ein Magnetfeldsensor (165). Der Magnetfeldsensor hat im vorliegenden Fall ein Sensorgehäuse (166), in dem ein Hall-Sensor untergebracht ist. An seinem nach Figur 1 linken Ende weist er eine Gewindebohrung auf, in der ein Gewindestift (168) eingeschraubt ist, während an seinem rechten Ende ein Sensorkabel (167) angeschlossen ist. Der Gewindestift (168) ist im Einbauzustand des Magnetfeldsensors (165) senkrecht zur Greifrichtung (9) und senkrecht zur Mittellinie (8) der Greifvorrichtung ausgerichtet. Nach einem z.B. greifhubabhängigen Ausrichten des Magnetfeldsensors (165) - parallel zur Greifrichtung - in der Messmittelnut (17), wird der Gewindestift (168) in Richtung Nutgrund der Messmittelnut (17) so tief eingeschraubt, dass das Sensorgehäuse (166) am Hintergriff der Messmittelnut (17) verrutschfest anliegt. Nun hat der Permanentmagnet (161) gegenüber dem Sensorgehäuse (166) einen über den Schlittenhub unveränderlichen Abstand von 1,75 - 1,85 mm.

In den Figuren 6 und 13 ist eine besonders platzsparende Kabelfixierung (170) dargestellt. Das mehradrige, an die Frontplatine (141) hinter dem vorderen Deckel (87) angeschlossene Versorgungskabel (200) benötigt eine Zugentlastung. Für diese Zugentlastung wird im Deckel (87) eine spezielle Senkbohrung (191) eingearbeitet, die mit der Bohrungsform einer am Deckel (87) angeschraubten Klemmhülse (171) unter Zuhilfenahme von zwei Kunststoffringen (177, 178) zusammenwirkt.

Die Senkbohrung (191) des Deckels (87) ist in drei Bereiche aufgeteilt. Der innenliegende Bereich ist ein zylindrischer Bohrungsabschnitt (192); dessen Durchmesser nur geringfügig größer ist als der Außendurchmesser des Kabels (200). Der au-ßenliegende Bereich ist ebenfalls ein zylindrischer Bohrungsabschnitt (194), dessen Tiefe ca. 1/3 der Deckelwandstärke beträgt. Sein Innendurchmesser berechnet sich im Ausführungsbeispiel aus der Summe aus dem Außendurchmesser des Kabels (200) und dem doppelten Schnurdurchmesser der Kunststoffringe (177, 178). Zwischen beiden zylindrischen Bohrungsabschnitten (192, 194) befindet sich ein kegelstumpfmantelförmiger Bund (193), dessen Kegelwinkel z.B. 90 Winkelgrade misst.

Selbstverständlich kann der Bund (193) auch konkav oder konvex sphärisch gekrümmt gestaltet sein. Der Bund (193) kann auch ein Vielflächner sein, dessen einzelne, z.B. ebene Teilflächen in scharfen Kanten ineinander übergehen.

Die Klemmhülse (171) hat nach Figur 1 die Form eines Quaders mit quadratischem Querschnitt, an dem nach Figur 13 ein kurzer Rohrabschnitt (172) angeformt ist. Letzterer zentriert die Klemmhülse (171) in der Senkbohrung (191) des Deckels (87). Die Klemmhülse (171) hat zur Durchführung des Kabels (200) eine bereichsweise zylindrische Bohrung (174), die nach außen in eine Fase (175) ausläuft, die ggf. gegenüber der äußeren Stirnfläche abgerundet ist.

Die Klemmhülse (171) hat beispielsweise eine - in Längsrichtung des Kabels (200) gemessene - Länge, die dem Außendurchmesser des Kabels (200) entspricht. Breite und Höhe der Klemmhülse (171) sind ca. 100 - 200 Prozent größer als ihre Länge. Der Rohrabschnitt (172) hat eine kegelstumpfmantelförmige Stirnfläche (173), deren Kegelwinkel ebenfalls 90 Winkelgrade misst. Die gedachte Spitze des Kegelwinkels liegt auf der Mittellinie der Bohrung (174) der Klemmhülse (171) innerhalb des Bereichs der Klemmhülse (171). Die Krümmung der Stirnfläche (173) kann die gleiche Form haben, wie die des deckelseitigen Bundes (193).

Der Rohrabschnitt (172), der in den Bohrungsabschnitt (194) hineinragt, hat eine Länge, die geringfügig kürzer ist als die Tiefe dieses Bohrungsabschnitts (194).

Nach Figur 13 liegen zwischen der kegelstumpfmantelförmigen Stirnfläche (173) und dem kegelstumpfmantelförmigen Bund (193) zwei Kunststoffringe (177, 178), deren Innendurchmesser kleiner ist als der Außendurchmesser des Kabels (200) und deren Schnurdurchmesser eine Größe hat, die der Radiusdifferenz der beiden Bohrungsabschnitte (192) und (194) entspricht. Die beiden Kunststoffringe (177, 178) sind beispielsweise handelsübliche O-Ringe aus dem Nitrilkautschuk NBR. Im Ausführungsbeispiel haben die O-Ringe (177, 178) einen Innendurchmesser von 5 mm bei einem Schnurdurchmesser von 2 mm.

Zur Herstellung der Kabelzugentlastung (170) werden auf das Kabelende die Klemmhülse (171) und die Kunststoffringe (177, 178) aufgeschoben. Anschließend wird das Kabelende durch die Senkbohrung (191) des Deckels (87) gesteckt und die Klemmhülse (171) mit den Kunststoffringen (177, 178) in den äußeren Bohrungsabschnitt (194) hineingeschoben. Von der Rückseite des Deckels (87) aus werden zwei oder z.B. vier Schrauben (197) durch deckelseitige Bohrungen hindurch in die Klemmhülse (171) eingeschraubt. Ggf. hat die Klemmhülse (171) hierfür vorgespritzt Bohrungen, in die gewindefurchende Schrauben (197) hineingeschraubt werden können.

Hierdurch wird die Klemmhülse (171) gegen den Deckel (87) gezogen. In der Folge pressen die kegelstumpfmantelförmige Stirnfläche (173) des Rohrabschnitts (172) und des Bundes (193) die O-Ringe (177, 178) gegen die Außenwandung des Kabels (200). Dies bewirkt um das Kabel (200) herum eine radiale Klemmkraft, die am Kabel zu einer zulässigen Einschnürung (201) führt, wodurch das Kabel (200) auch formschlüssig in der Klemmhülse (171) bzw. im Deckel (87) gehalten wird. Das Kabel ist auf diese Weise im Deckel (87) so fest fixiert, dass eine axiale Auszugskraft von 100 N nicht ausreicht, um die Zugentlastung zu beschädigen.

Die Klemmhülse (171) ermöglicht für das Kabel (200) eine eng am Gehäuse (10) außen entlangführbare Kabelverlegung.

Kombinationen der verschiedenen Ausführungsbeispiele, z.B. eine Verbindung der Messsystems mit dem internen mit dem Messystem mit dem externen Sensor, sind denkbar.

### Bezugszeichenliste:

- 1, 2: Greifelemente
- 8: Mittellinie
- 9: Greifrichtung

- 10: Gehäuse
- 11: Führungskörper, Gehäuse
- 12: Doppelführungsnut
- 13: Führungsstollen
- 14: Durchgangsbohrung
- 15: Querbohrung
- 17: Messmittelnuten, Tragvorrichtung
- 19: Unterseite von (11)

- 23: Befestigungsschrauben
- 24: Passstifte
- 27: Haltestift für (31, 32)
- 28, 29: Langlöcher

- 31, 32: Schlitten
- 33: Schlittenarme
- 34: Schlittenlängsnut
- 35: Langloch
- 37: Zahnstange
- 38, 39: Haltenuten für (151, 152)

- 51: Grundkörper, Gehäuse
- 52: Oberseite
- 54: Vorderseite, Stirnfläche
- 55: Rückseite
- 61: Hauptausnehmung
- 62: Stollen
- 63: Wellenlagerausnehmung
- 64: Antriebseinsenkung
- 65: Nebenwelleneinsenkung
- 66: Zwischenradeinsenkung

- 71: Stufensacklochbohrung
- 72: Axiallagerzone
- 73: Schneckenradzone
- 74: Radiallagerzone
- 75: Boden
- 77: Gewindedurchgangsbohrungen
- 78: Gewindebohrungen

- 80: Antriebsstrang
- 81: Antriebsmotor, Elektromotor, Stellglied
- 83: Antriebsrad

- 87: Deckel, vorn, vorderseitig
- 88: Deckel, hinten, rückseitig
- 89: Blende

- 90: Getriebe, Zahnstangengetriebe Synchronisiergetriebe
- 91: Synchronisierwelle, Welle
- 92: Synchronrad, Stirnrad
- 93: Axiallagerflansch
- 97: Wellenende, Bauteilende
- 100: Winkelgetriebe, Schneckengetriebe
- 101: Schneckenrad, unecht; Schraubrad
- 102: Schnecke
- 103: Schneckenwelle
- 104: Schneckenwellenstirnrad
- 108: Zwischenrad

- 111: Nadellager
- 112: Rillenkugellager
- 113: Tellerfedern
- 114: Stützhülsen
- 115: Ringschraube
- 119: Deckelschrauben, Senkschrauben

- 120: Stirnradgetriebe
- 121: Nebenwelle
- 122: Nebenwellenrad, groß
- 123: Nebenwellenrad, klein

- 130: Weg- oder Winkelmesssystem
- 131: Magnetfelderzeuger
- 132: Permanentmagnet, Diametralmagnet
- 135: Magnetfeldsensor

- 141: Frontplatine an vorderem Deckel, elektronische Baugruppe
- 142: Drehschalter für Drehzahleinstellung
- 143: Stromversorgungs-LED
- 144: Fehlermeldungs-LED
- 145: Auswerteplatine, elektronische Baugruppe
- 146: Motortreiberplatine, elektronische Baugruppe
- 147: Gleitschiene
- 150: Magnethalterung, Spritzgussteil
- 151: Tragelement in (31)
- 152: Tragelement in (32)
- 153: Haltestab, stabförmiger Körper
- 154: Einsteckzapfen
- 155: Anschlagfläche
- 156: Magnetausnehmung, Ausnehmung
- 157: Stirnflächen, unten; Boden

- 161: Magnetfelderzeuger; Permanetmagnet, scheibenförmig

- 165: Magnetfeldsensor mit Rohrgehäuse
- 166: Sensorgehäuse
- 167: Sensorkabel
- 168: Gewindestift

- 170: Kabelhalterung, Kabelfixierung, Kabelzugentlastung
- 171: Klemmhülse
- 172: Rohrabschnitt
- 173: Stirnfläche von (172)
- 174: Bohrung
- 175: Fase
- 177, 178: Kunststoffringe, O-Ringe

- 191: Senkbohrung in (87)
- 192: Bohrungsabschnitt, zylindrisch, innen
- 193: Bund, kegelstumpfmantelförmig
- 194: Bohrungsabschnitt, zylindrisch, außen

- 197: Senkschrauben, gewindefurchend

- 200: Versorgungskabel, Kabel
- 201: Einschnürung

## Patentansprüche

1. Greifvorrichtung mit mindestens zwei aufeinander zu- oder voneinander wegbewegbar angeordneten Greifelementen (1, 2), die im Gehäuse (10) in einem Führungskörper (11) auf Schlitten (31, 32) sitzen oder von Schlitten getriebetechnisch angelenkt werden,
- wobei im Führungskörper (11) als Tragvorrichtung eine Messmittelnut (17) eingearbeitet ist, in der ein Magnetfeldsensor (165) fest oder justierbar gehalten wird und
- wobei an mindestens einem Schlitten (31, 32) innerhalb des Führungskörpers (11) ein Tragelement (151, 152) quer zur Greifrichtung (9) angeordnet ist, das einen - hinter der Messmittelnut (17) befindlichen - Magnetfelderzeuger (161) lagert.

2. Greifvorrichtung nach Anspruch 1, **dadurch gekennzeichnet, dass** der Magnetfelderzeuger (161) aus mindestens einem Permanetmagnet besteht.

3. Greifvorrichtung nach Anspruch 1, **dadurch gekennzeichnet, dass** das Tragelement (151, 152) ein stabförmiger Körper (153) ist, der quer zu seiner Längsausdehnung eine Ausnehmung (156) aufweist, in der ein Magnetfelderzeuger (161) eingelegt oder eingeklemmt angeordnet ist.

4. Greifvorrichtung nach Anspruch 3, **dadurch gekennzeichnet, dass** das Tragelement (151, 152) an einem Ende einen Einsteckzapfen (154) aufweist, mit dem es in einer Nut, Bohrung oder anders geformten Ausnehmung (38, 39) des tragenden Schlittens (31, 32) angeordnet ist.

5. Greifvorrichtung nach Anspruch 3, **dadurch gekennzeichnet, dass** das Tragelement (151, 152) an dem dem Einsteckzapfen (154) abgewandten Ende eine plane Stirnfläche (157) aufweist.

6. Greifvorrichtung nach Anspruch 1, **dadurch gekennzeichnet, dass** der Magnetfeldsensor (165) aus mindestens einem Hall-Sensor, einem Reed-Kontakt oder einem induktiven Sensor besteht.

7. Greifvorrichtung nach Anspruch 1, **dadurch gekennzeichnet, dass** der Magnetfeldsensor (165) in einem rohrförmigen Sensorgehäuse (166) eingebaut ist.

8. Greifvorrichtung nach Anspruch 1, **dadurch gekennzeichnet, dass** die Tragvorrichtung (17) eine in der Außenwandung des Gehäuses (10) eingefräste Nut ist, deren Querschnitt sich im Bereich der beiden Nutkanten zu einer Hintergriffskontur verengt.

## Claims

1. A gripping device with at least two gripping elements (1, 2) arranged such that they can be moved toward or away from each other, which are located in the housing (10) in a guiding body (11) on slides (31, 32) or are articulated by slides in the manner of a gear,
- wherein a measuring means groove (17) is incorporated in the guiding body (11) as a support device, in which a magnetic field sensor (165) is held in a fixed manner or adjustably, and
- wherein a support element (151, 152) is arranged transversely to the gripping direction (9) on at least one slide (31, 32) within the guiding body (11), which support element (151, 152) supports a magnetic field generator (161) located behind the measuring means groove (17).

2. The gripping device according to claim 1, **characterized in that** the magnetic field generator (161) consists of at least one permanent magnet.

3. The gripping device according to claim 1, **characterized in that** the supporting element (151, 152) is a rod-shaped body (153) which has a recess (156) transverse to its longitudinal extension, into which recess (156) a magnetic field generator (161) is inserted or clamped.

4. The gripping device according to claim 3, **characterized in that** the supporting element (151, 152) has an insert pin (154) at one end, with which it is arranged in a groove, hole or differently formed recess (38, 39) of the load-bearing slide (31, 32).

5. The gripping device according to claim 3, **characterized in that** the supporting element (151, 152) has a flat end face (157) at the end facing away from the insert pin (154).

6. The gripping device according to claim 1, **characterized in that** the magnetic field sensor (165) consists of at least one Hall sensor, a reed contact or an inductive sensor.

7. The gripping device according to claim 1, **characterized in that** the magnetic field sensor (165) is installed in a tubular sensor housing (166).

8. The gripping device according to claim 1, **characterized in that** the supporting device (17) is a groove cut into the outer wall of the housing (10), the cross-section of which groove narrows in the region of the two groove edges to a contour, the rear side of which offers a surface for engagement.

## Revendications

1. Dispositif de préhension, doté d'au moins deux éléments de préhension (1, 2) déplaçables l'un vers l'autre ou l'un loin de l'autre, qui sont logés dans le boîtier (10) dans un corps de guidage (11) sur des chariots (31, 32) ou qui sont articulés par transmission par des chariots,
- dans le corps de guidage (11) étant incorporée en tant que dispositif porteur une rainure pour moyens de mesure (17), dans laquelle un capteur de champ magnétique (165) est maintenu de manière fixe ou ajustable et
- sur au moins un chariot (31, 32) à l'intérieur du corps de guidage (11), un élément porteur (151, 152) qui loge un générateur de champ magnétique (161) qui se trouve à l'arrière de la rainure pour moyens de mesure (17) étant placé à la transversale de la direction de préhension (9).

2. Dispositif de préhension selon la revendication 1, **caractérisé en ce que** le générateur de champ magnétique (161) est constitué d'au moins un aimant permanent.

3. Dispositif de préhension selon la revendication 1, **caractérisé en ce que** l'élément porteur (151, 152) est un corps (153) en forme de barre, qui à la transversale de son extension longitudinale comporte un évidement (156), dans lequel est placé en étant inséré ou enserré un générateur de champ magnétique (161).

4. Dispositif de préhension selon la revendication 3, **caractérisé en ce que** l'élément porteur (151, 152) comporte sur une extrémité un tenon d'enfichage (154) par lequel il est placé dans une rainure, un perçage ou un évidement (38, 39) de forme différente du chariot (31, 32) porteur.

5. Dispositif de préhension selon la revendication 3, **caractérisé en ce que** l'élément porteur (151, 152) comporte sur l'extrémité opposée au tenon d'enfichage (154) une face frontale (157) plane.

6. Dispositif de préhension selon la revendication 1, **caractérisé en ce que** le capteur de champ magnétique (165) est constitué d'au moins un capteur à effet Hall, d'un contact Reed ou d'un capteur inductif.

7. Dispositif de préhension selon la revendication 1, **caractérisé en ce que** le capteur de champ magnétique (165) est encastré dans un capteur de boîtier (166) de forme tubulaire.

8. Dispositif de préhension selon la revendication 1, **caractérisé en ce que** le dispositif porteur (17) est une rainure fraisée dans la paroi extérieure du boîtier (10), dont la section transversale se rétrécit dans la zone des deux arêtes de rainure vers un contour de retenue par l'arrière.
